# DEMANDE DE BREVET EUROPEEN

(11) **EP 1 479 592 A1**
(43) Date de publication de la demande: **24.11.2004**
(21) Numéro de dépôt: 04291129.7
(22) Date de dépôt: 03.05.2004
(51) Int. Cl.: B62D 1/19

(54) **Dispositif à capsules métalliques déformables d'un sytème d'absorption d'énergie d'une colonne de direction de véhicule automobile**

(30) Priorité: 19.05.2003 FR 0306001
(71) Demandeur: NACAM France S.A., F-41100 Vendôme (FR)
(72) Inventeur: Delavaud, Fabien, Savassi, 30112-011 Belo Horizonte M.G. (BR); Lepoittevin, Yann, 37110 Morand (FR)
(74) Mandataire: Cabinet Martinet & Lapoux

(57) **Abrégé**

La colonne de direction est montée dans un support fixé à la structure du véhicule par des vis de fixation. Des capsules d'absorption d'énergie 10 sont disposées et serrées selon les axes des vis de fixation. Chaque capsule 10 comporte un élément central 11 avec une pliure 12 d'axe 22 et deux portions centrales. La portion centrale 17 porte deux éléments latéraux 13, 14 élastiques dont l'axe de déformation 23, 24 est perpendiculaire à l'axe 22. La portion centrale 17 a une entretoise 21 qui s'applique contre la portion centrale 18 après fixation, en comprimant les éléments latéraux 13, 14 pour absorber de l'énergie par glissement en cas de choc. La portion centrale 18 comporte deux éléments de maintien 15 et 16 flexibles qui s'engagent dans le support pour le transport de la colonne.

## Description

La présente invention se rapporte à un dispositif d'absorption d'énergie d'une colonne de véhicule automobile. La colonne de direction est montée dans un ensemble support qui est relié et solidarisé à la structure du véhicule par des moyens de fixation, avec au moins une capsule d'absorption d'énergie disposée sur l'un des moyens de fixation.

Il existe des colonnes de direction qui ont une ou plusieurs capsules d'absorption d'énergie qui sont montées directement selon l'/les axe(s) de fixation. L'absorption d'énergie de chaque capsule dépend donc du serrage de l'ensemble support sur la structure du véhicule.

Parmi les solutions les plus répandues assurant le désengagement des corps de colonne, on retrouve des capsules injectées et des capsules plastiques.

Dans les capsules injectées, du plastique est injecté à l'interface entre la capsule et une zone de la patte de fixation. Lorsqu'un effort suffisant est appliqué à la patte, les pions de plastique injecté sont cisaillés et la patte se désengage des capsules, liées au support véhicule. L'effort de désengagement relatif est lié au diamètre des pions cisaillés.

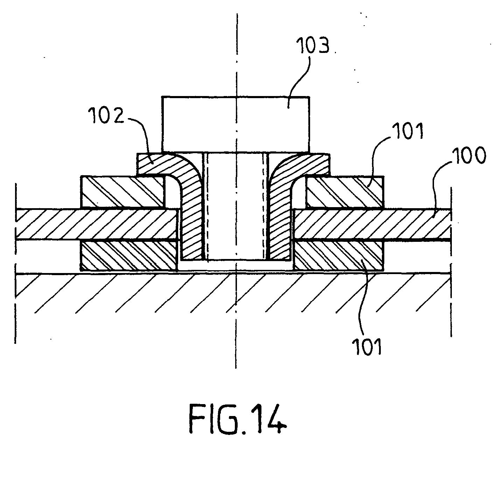

Dans les capsules plastiques représentées à la figure 14, la patte de fixation 100 de la colonne est prise entre deux patins plastiques 101, traversés par un insert métallique 102. La vis de fixation 103 sur véhicule appuie sur l'insert 102, qui met l'ensemble patins 101 et patte métallique 100 en tension. Le pic de décollement est dimensionné par la tension dans l'empilement et le coefficient de frottement.

Dans la fabrication en grande série, comme c'est le cas dans l'industrie automobile, il est difficile de réaliser et de garantir un serrage précis et constant de la fixation et donc de la pression de serrage de la ou des capsules d'absorption d'énergie. Comme l'absorption d'énergie de ces capsules dépend directement de ce serrage, il en résultera une absorption d'énergie imprécise. Mais dans les véhicules automobiles actuels et futurs, il est de plus en plus impératif que les caractéristiques de sécurité passive soient précises et efficaces.

Le but de la présente invention est de proposer un dispositif d'absorption d'énergie qui évite les inconvénients décrits ci-dessus, et qui permet un réglage facile et précis de la valeur demandée de l'absorption d'énergie.

L'invention s'applique à un dispositif d'absorption d'énergie d'une colonne de direction de véhicule automobile, qui est montée dans un ensemble support relié et solidarisé à la structure du véhicule par des moyens de fixation, qui ont chacun leur axe de fixation, et qui peuvent comporter une capsule d'absorption d'énergie, en tôle métallique, disposée et serrée dans ledit ensemble support par le moyen de fixation. Ce dispositif est caractérisé en ce que :
- ledit dispositif est muni d'au moins une capsule d'absorption d'énergie qui comporte un élément central et deux éléments latéraux ;
- l'élément central est constitué par une partie pliée à 180 ° avec une pliure se prolongeant par deux portions centrales, ladite pliure ayant un rayon de courbure déterminé autour d'un axe de pliage ;
- chacun des deux éléments latéraux est réalisé sur chacun des deux côtés de la portion centrale, il s'articule autour d'un axe de déformation sensiblement perpendiculaire à l'axe de pliage et situé à proximité du côté correspondant de manière, qu'à l'état libre, l'extrémité de chaque élément latéral se rapproche de l'autre portion centrale ;
- les deux portions centrales possèdent chacune un trou de passage de l'élément de fixation ;
- l'une des deux portions centrales est munie d'une entretoise avec un trou de passage de l'élément de fixation et dont la longueur est déterminée de manière, qu'après fixation de la capsule d'absorption d'énergie avec l'ensemble support sur la structure du véhicule, l'entretoise s'applique contre l'autre portion centrale en comprimant les deux éléments latéraux à la valeur voulue.

Préférablement, l'entretoise est agencée sur la portion centrale munie des deux éléments latéraux, dont les deux axes de déformation sont sensiblement perpendiculaires à l'axe de pliage, le moyen de fixation étant constitué par une vis de fixation, qui se monte directement dans la structure du véhicule.

Selon un mode de réalisation de l'invention, la portion centrale, non munie d'éléments latéraux, comporte au moins un élément de maintien relativement flexible qui est réalisé dans la même tôle métallique que ladite portion centrale. Ledit élément de maintien s'articule autour d'un axe de maintien situé sur le côté de ladite portion centrale, de manière, qu'à l'état libre, ledit élément de maintien a son extrémité qui se rapproche de l'autre portion centrale, et qu'après montage sur l'ensemble support, ladite extrémité s'engage dans une fente aménagée dans l'ensemble support pour assurer la mise en place et le maintien de la capsule d'absorption d'énergie sur l'ensemble support avant montage dans le véhicule automobile, l'élément de maintien étant monté contre la face d'appui de la structure.

Préférablement, la portion centrale non munie d'éléments latéraux comporte deux éléments de maintien dont l'axe de maintien est sensiblement parallèle à l'axe de pliage.

Selon une première architecture de l'invention, la capsule d'absorption d'énergie est disposée sur l'ensemble support de manière que l'axe de pliage soit sensiblement perpendiculaire à la direction de la force due au choc. L'ouverture de passage de l'élément de fixation, qui est agencée sur l'ensemble support, est allongée et débouchante dans la direction de la force due au choc, pour permettre le désengagement de la capsule de l'ensemble support. La fente, qui est aménagée dans l'ensemble support, se prolonge par un léger renfoncement, afin d'assurer le dégagement de l'élément de maintien en cas de choc.

Selon une deuxième architecture de l'invention, la capsule d'absorption d'énergie est disposée sur l'ensemble support de manière que l'axe de pliage soit sensiblement parallèle à la direction de la force due au choc. Le trou de passage de l'élément de fixation, qui est agencé sur l'ensemble support, est allongé dans la direction de la force due au choc, pour permettre la course d'absorption d'énergie. La fente, qui est aménagée dans l'ensemble support, se prolonge par un chanfrein à faible pente, dirigé dans la direction de la force due au choc, afin d'assurer le dégagement de l'élément de maintien en cas de choc.

Dans un premier agencement de l'invention, la colonne de direction comporte deux capsules d'absorption d'énergie qui sont disposées de part et d'autre du plan vertical passant par l'axe de direction, et dont l'axe de pliage est sensiblement perpendiculaire à la direction de la force due au choc.

Dans un deuxième agencement de l'invention, la colonne de direction comporte deux capsules d'absorption d'énergie, qui sont disposées de part et d'autre du plan vertical passant par l'axe de direction, et dont l'axe de pliage est sensiblement parallèle à la direction de la force due au choc.

Dans un troisième agencement de l'invention, la colonne de direction comporte, en plus des deux capsules d'absorption d'énergie à axe de pliage sensiblement perpendiculaire à la direction du choc, deux capsules d'absorption d'énergie à axe de pliage sensiblement parallèle à la direction du choc et qui sont disposées de part et d'autre du plan vertical passant par l'axe de direction.

Dans ces trois agencements de l'invention, chaque groupe de deux capsules d'absorption d'énergie comporte deux capsules identiques, qui sont disposées symétriquement l'une par rapport à l'autre par rapport au plan vertical passant par l'axe de direction.

Le dispositif d'absorption d'énergie d'une colonne de direction selon l'invention présente ainsi l'avantage de permettre un glissement de l'élément support mobile dans l'élément support fixe avec un effort maîtrisé. Le montage et le maintien des capsules sur la colonne de direction est effectué en usine et il est indépendant du montage sur le véhicule. De plus, l'invention permet d'avoir éventuellement un seul modèle de capsule produit en très grande série, qui peut être montée parallèlement ou perpendiculairement à la direction de la force due au choc.

Le type de capsule d'absorption d'énergie selon l'invention permet d'avoir, en cas de choc, un effort de glissement et donc une absorption d'énergie qui ne dépend pas du couple de serrage de la vis de fixation. La capsule offre avec une seule et même pièce deux fonctions :
- la fonction d'absorption d'énergie, et
- la fonction de maintien sur la colonne avant montage sur le véhicule et après une mise en place particulièrement simple.

Le fonctionnement est robuste dans le temps et en température, la capsule d'absorption d'énergie étant conçue de manière à rester dans un domaine de déformation élastique.

D'autres caractéristiques et avantages de la présente invention apparaîtront plus clairement à la lecture de la description suivante de plusieurs réalisations préférées de l'invention en référence aux dessins annexés correspondants dans lesquels :
- la figure 1 est une vue en perspective d'une capsule d'absorption d'énergie selon l'invention ;
- la figure 2 est une vue en perspective suivant II de la figure 1 ;
- la figure 3 est une vue suivant III de la figure 1, la capsule d'absorption étant montée sur l'ensemble support ;
- la figure 4 est une coupe suivant le plan IV-IV de la figure 3 ;
- la figure 5 est une coupe suivant le plan V-V de la figure 3 ;
- la figure 6 est une coupe analogue à la figure 4 avec la capsule d'absorption d'énergie fixée à la structure du véhicule ;
- la figure 7 est une coupe analogue à la figure 5 avec la capsule d'absorption d'énergie fixée à la structure du véhicule ;
- la figure 8 est une vue en perspective suivant VIII de la figure 5, l'ensemble support étant dans la zone de la capsule d'absorption d'énergie ;
- la figure 9 est une vue en perspective analogue à la figure 2, d'un autre montage de la capsule d'absorption d'énergie ;
- la figure 10 est une vue en perspective analogue à la figure 1 du montage de la figure 9 ;
- la figure 10A est une vue partielle à grande échelle de la figure 10 ;
- la figure 11 est une coupe suivant le plan XI-XI de la figure 10 ;
- la figure 12 est une coupe analogue à la figure 11, après fixation sur la structure du véhicule ;
- la figure 13 est une vue d'ensemble en perspective de l'ensemble support avec quatre capsules vues comme sur la figure 2, deux capsules sont disposées comme sur la figure 3, et deux capsules sont disposées comme sur la figure 9 ; et
- la figure 14 est une coupe de capsules plastiques connues.

Le dispositif d'absorption d'énergie selon l'invention se rapporte plus particulièrement à une colonne de direction de véhicule automobile.

Quel que soit le mode de réalisation possible de l'invention, la colonne de direction est toujours constituée par un arbre de direction, qui tourne autour d'un axe de direction. Cet arbre de direction est monté tournant dans un tube corps.

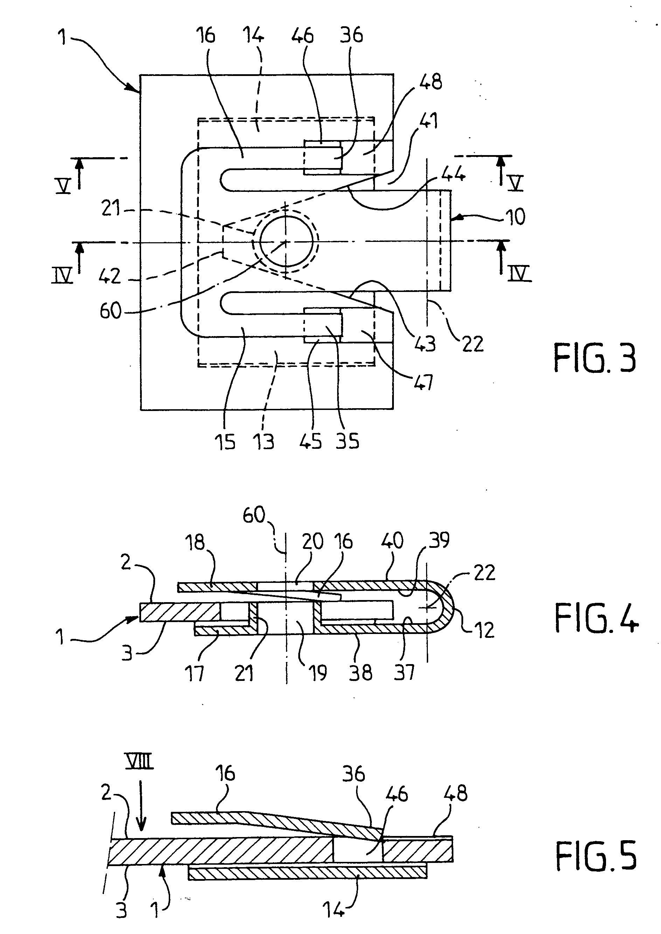

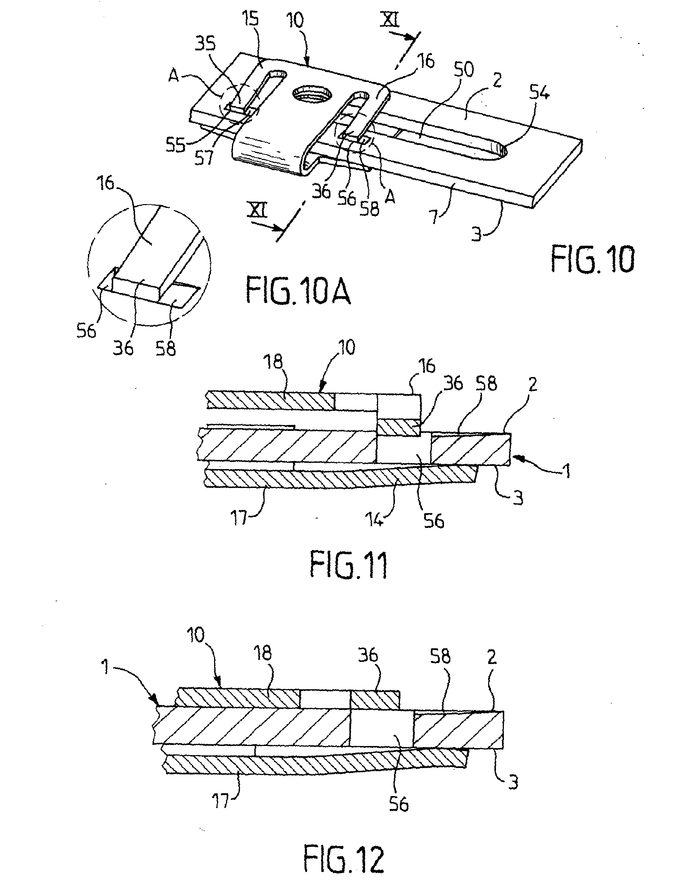

Le tube corps est disposé dans un ensemble support, qui est fixé à la structure du véhicule. Cet ensemble support comporte une plaque support 1 qui est reliée à la structure du véhicule et reste fixe par rapport à cette structure lors de l'utilisation normale du véhicule. C'est seulement lors d'un choc que la plaque support 1 se déplace par rapport à la structure du véhicule par l'intermédiaire du système d'absorption d'énergie. La colonne de direction est seulement représentée par la plaque support 1, qui est dessinée sur les figures 3 à 13.

Dans la suite de la description et pour un même élément, on appellera interne ou intérieur par rapport à l'axe de direction ou par rapport au plan vertical de cet axe de direction, ce qui est le plus près de cet axe ou de ce plan, et externe ou extérieur ce qui est le plus éloigné. Pour un même élément, on appellera avant ce qui est le plus près du boîtier de direction non représenté, et arrière ce qui est le plus près du volant de direction également non représenté.

Le plan vertical passant par l'axe de direction coupe la plaque support 1 représentée complètement et schématiquement sur la figure 13 selon un axe référencé 4.

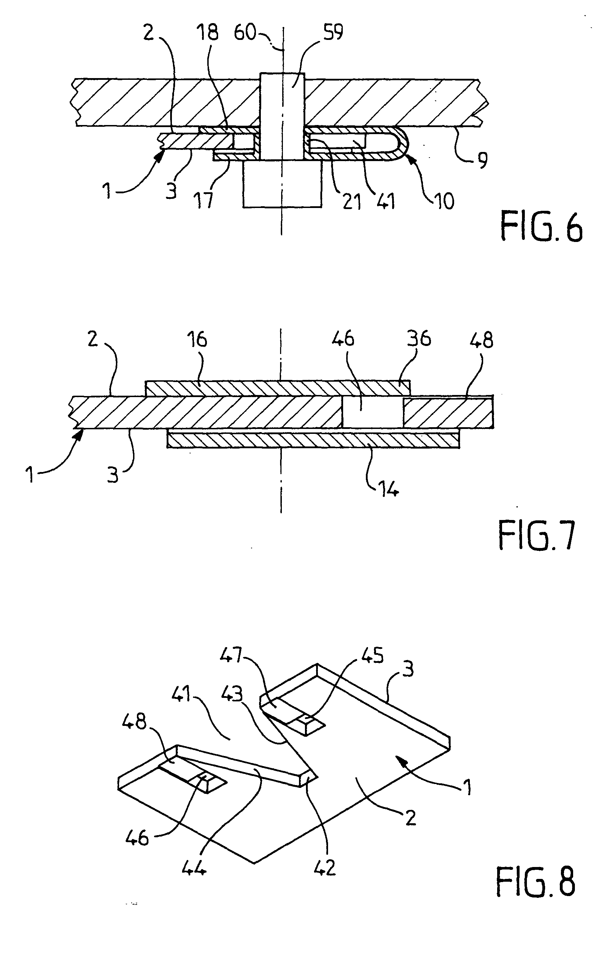

La plaque support 1 est reliée et solidarisée à la structure du véhicule par des moyens de fixation constitués par des vis de fixation 59 ayant chacune leur axe de fixation 60, comme cela est représenté aux figures 6 et 13.

Selon l'invention, il y a au moins une vis de fixation 59 qui comporte une capsule d'absorption d'énergie 10, qui est disposée dans la plaque support 1 de l'ensemble support selon l'axe de fixation 60. La capsule d'absorption d'énergie 10 est serrée dans la plaque support 1 à l'aide de la vis de fixation 59, pour venir s'appliquer contre la face d'appui 9 de la structure du véhicule.

Dans le cas de la figure 13, il y a quatre capsules d'absorption d'énergie 10.

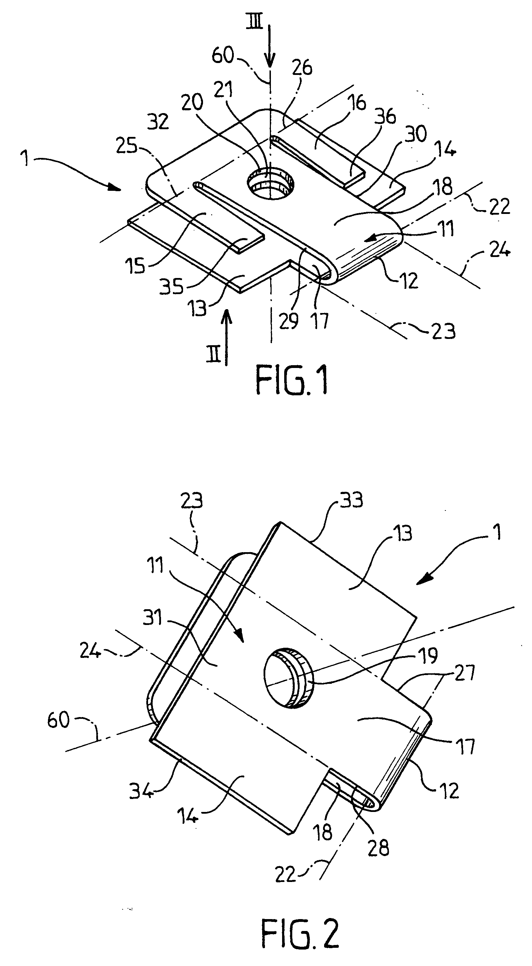

La capsule d'absorption d'énergie 10 est représentée en perspective sur les figures 1 et 2.

La capsule d'absorption d'énergie 10 comporte un élément central 11 et deux éléments latéraux 13 et 14 qui sont réalisés dans le même élément de tôle métallique.

L'élément central 11 est constitué par la tôle pliée à 180 ° avec une pliure 12 se prolongeant par deux portions centrales : une première portion centrale 17 et une deuxième portion centrale 18. La pliure 12 a un rayon de courbure déterminé autour d'un axe de pliage 22.

La première portion centrale 17 possède deux côtés 27 et 28, et la deuxième portion centrale 18 possède deux côtés 29 et 30. L'élément latéral 13 est réalisé sur le côté 27 de la première portion centrale 17, et il s'articule autour d'un axe de déformation 23 qui est situé à proximité ou qui se confond avec ledit côté 27. L'élément latéral 14 est réalisé sur le côté 28 de la première portion centrale 17, et il s'articule autour d'un axe de déformation 24, qui est situé à proximité ou qui se confond avec ledit côté 28. A l'état libre, l'extrémité 33 de l'élément latéral 13 et l'extrémité 34 de l'élément latéral 14 se rapprochent de la deuxième portion centrale 18. Les deux axes de déformation 23 et 24 sont sensiblement perpendiculaires à l'axe de pliage 22.

Les deux portions centrales 17 et 18 possèdent chacune un trou de passage correspondant 19 et 20 de la vis de fixation 59.

Comme on peut le voir sur les figures 4 et 6, la première portion centrale 17 est munie d'une entretoise 21 agencée autour du trou de passage 19 de la vis de fixation 59. Selon l'invention, la longueur de l'entretoise 21 est déterminée de manière, qu'après fixation de la capsule d'absorption d'énergie 10 avec l'ensemble support sur la structure du véhicule, l'entretoise 21 s'applique contre la face interne 39 de la deuxième portion centrale 18, en comprimant les deux éléments latéraux 13 et 14 à la valeur voulue. La vis de fixation 59 bloque la capsule d'absorption d'énergie 10 sur la plaque support 1, en s'appuyant sur la face externe 38 de la première portion centrale 17, tandis que la face externe 40 de la deuxième portion centrale 18 s'applique contre la face d'appui 9 de la structure. Les deux éléments latéraux 13 et 14 sont comprimés entre la face interne 37 de la première portion centrale 17 et la face inférieure 3 de la plaque support 1, tandis que la face supérieure 2 s'applique contre la face interne 39 de la deuxième portion centrale 18.

La deuxième portion centrale 18 comporte deux éléments de maintien 15 et 16 relativement flexibles qui sont réalisés dans la même tôle métallique que ladite portion centrale 18. Chaque élément de maintien 15 et 16 s'articule autour d'un axe de maintien correspondant 25, 26 qui est situé sur le côté correspondant 29, 30 de ladite portion centrale 18. A l'état libre, chaque élément de maintien 15 et 16 a son extrémité correspondante 35 et 36 qui se rapproche de la première portion centrale 17. Après montage sur l'ensemble support 1, chaque extrémité 35, 36 s'engage dans une fente aménagée dans la plaque support 1 pour assurer la mise en place et le maintien de la capsule d'absorption d'énergie 10 sur la plaque support 1 avant montage dans le véhicule automobile, les éléments de maintien 15 et 16 étant montés contre la face d'appui 9 de la structure.

L'axe de maintien 25 et 26 est sensiblement parallèle à l'axe de pliage 22.

Dans le montage de la capsule d'absorption d'énergie 10 représenté sur les figures 3 à 8, la capsule d'absorption d'énergie 10 est disposée sur la plaque support 1 de manière que l'axe de pliage 22 soit sensiblement perpendiculaire à la direction de la force due au choc. Une ouverture de passage 41 de la vis de fixation 59 est agencée sur la plaque support 1. L'ouverture 41 est allongée et débouchante dans la direction de la force due au choc, pour permettre le désengagement de la capsule 10 de la plaque support 1.

L'ouverture de passage 41 comporte deux côtés 43 et 44 qui se rapprochent l'un de l'autre vers un fond 42. Une fente 45 et 46 est aménagée sur la face supérieure 2 de la plaque support 1, de part et d'autre de l'ouverture 41 de manière à recevoir l'extrémité correspondante 35 et 36 de l'élément de maintien 15 et 16.

La fente 45 se prolonge par un léger renfoncement 47 afin d'assurer le dégagement de l'élément de maintien 15 en cas de choc. De la même façon, la fente 46 se prolonge par un léger renfoncement 48 pour le dégagement de l'élément de maintien 16. La mise en place de la capsule d'absorption d'énergie 10 sur la plaque support 1 est ainsi assurée dans un sens par la butée de l'entretoise 21 entre les côtés inclinés 43 et 44 de l'ouverture de passage 41. La mise en place est assurée dans l'autre sens par la butée des extrémités 35 et 36 des éléments de maintien 15 et 16 contre les fentes 45 et 46.

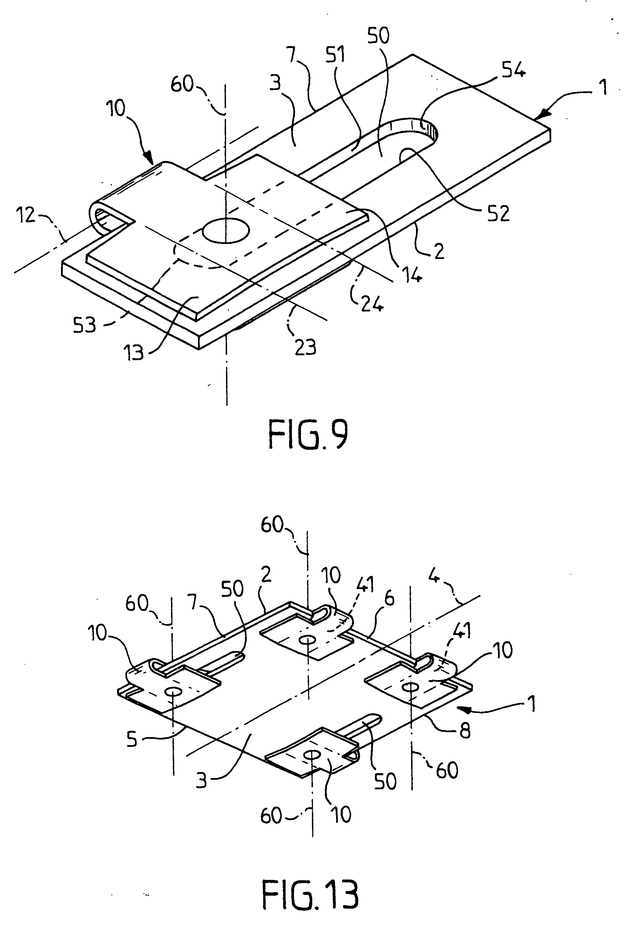

Dans le montage de la capsule d'absorption d'énergie 10 représenté sur les figures 9 à 12, la capsule d'absorption d'énergie 10 est disposée sur la plaque support 1 de manière que l'axe de pliage 22 soit sensiblement parallèle à la direction de la force due au choc. Le trou de passage 50 de la vis de fixation 59 est agencé sur la plaque support 1. Le trou de passage 50 est allongé dans la direction de la force due au choc, pour permettre la course d'absorption d'énergie.

Le trou de passage 50 est allongé avec deux cotés 51 et 52, et deux extrémités arrondies 53 et 54.

Une fente 55 et 56 est aménagée sur la face supérieure 2 de la plaque support 1, le long du côté correspondant de ladite plaque support et entre ledit côté et le côté 51 du trou de passage 50. Les fentes 55 et 56 sont aménagées de manière à recevoir l'extrémité correspondante 35 et 36 de l'élément de maintien 15 et 16. La fente 55 se prolonge par un chanfrein 57 à faible pente, dirigé dans la direction de la force due au choc, afin d'assurer le dégagement de l'élément de maintien 15 en cas de choc. De la même façon, la fente 56 se prolonge par un chanfrein 58 à faible pente pour le dégagement de l'élément de maintien 16.

La mise en place de la capsule d'absorption d'énergie 10 sur la plaque support 1 est ainsi assurée dans un sens par la butée de l'entretoise 21 sur le côté 52 du trou de passage 50. La mise en place est assurée dans l'autre sens par la butée des extrémités 35 et 36 des éléments de maintien 15 et 16 contre les fentes 55 et 56.

La plaque support 1 représentée sur la figure 13 comporte 4 capsules d'absorption d'énergie 10.

Deux capsules d'absorption d'énergie 10 sont disposées de part et d'autre du plan vertical 4 passant par l'axe de direction. Elles ont l'axe de pliage 22, qui est sensiblement perpendiculaire à la direction de la force due au choc. Elles s'engagent sur le côté arrière 6 de la plaque-support 21 du côté du volant.

Deux capsules d'absorption d'énergie 10 sont disposées de part et d'autre du plan vertical 4 passant par l'axe de direction. Elles ont l'axe de pliage 22, qui est sensiblement parallèle à la direction de la force due au choc. Elles s'engagent respectivement sur le côté 7 et 8 de la plaque support 1 qui est parallèle au plan vertical 4.

Chaque groupe de deux capsules d'absorption d'énergie 10 comporte deux capsules identiques, qui sont disposées symétriquement l'une par rapport à l'autre par rapport au plan vertical 4 passant par l'axe de direction.

Les éléments latéraux 13 et 14 fournissent l'effort de glissement voulu entre la capsule d'absorption d'énergie 10 et la plaque-support 1, et ils se déforment autour d'un axe 23 et 24 perpendiculaire à l'axe de pliage 22 de la capsule 10. Leur raideur est k1. Les éléments de maintien 15 et 16 servent au maintien en position des capsules 10 pendant le transport. Leur raideur est k2. Ils peuvent se déformer autour d'un axe 25, 26 parallèle à l'axe de pliage 22 de la capsule 10. La condition de fonction est : k1»k2.

La capsule d'absorption d'énergie 10 doit pouvoir être retenue sur la colonne de direction pendant le transport avant montage de la colonne de direction dans le véhicule.

Lorsque la capsule 10 est montée sur la plaque support 1, les éléments de maintien 15 et 16 se déforment et viennent se loger dans les fentes 45 et 46 de la plaque support 1. La butée de la capsule 10 sur la plaque support 1 est effectuée dans un sens par le contact de l'entretoise 21 et de la plaque support 1, et dans l'autre sens par la mise en butée des éléments de maintien 15 et 16 dans leurs fentes respectives 45 et 46.

Lorsque la colonne de direction est fixée sur son support véhicule, la vis de fixation 59 tend à comprimer la capsule 10. Les éléments de maintien 15 et 16 étant moins rigides que les éléments latéraux 13 et 14, puisque k1»k2, ils se déforment d'abord jusqu'à s'aplatir entre la plaque support 1 et la face d'appui 9 du véhicule.

Une fois les éléments de maintien 15 et 16 aplatis, les éléments latéraux 13 et 14 plient jusqu'à ce que l'extrémité de l'entretoise 21 vienne buter contre la partie opposée de la capsule 10.

Afin d'éviter que les éléments de maintien 15 et 16 interfèrent avec la plaque support 1 en cas de désengagement de la colonne de direction dû à un choc, le système est conçu de sorte que lorsque ces éléments sont aplatis, leur extrémité 35 et 36 laisse un jeu avec la face supérieure 2 de la plaque support 1. Ce jeu est garanti par la profondeur des renfoncements 47 et 48 positionnés sur la plaque support 1.

L'effort de glissement des capsules 10 est ainsi uniquement dimensionné par la raideur des éléments latéraux 13 et 14, leur taux de contrainte une fois montées, et le coefficient de frottement entre la capsule 10 et la plaque support 1.

La capsule d'absorption d'énergie 10 est réalisée dans une tôle métallique. La tôle utilisée, dont l'épaisseur peut varier selon l'effort de glissement voulu, est une tôle à haute limite élastique. La capsule 10, une fois montée, doit rester dans son domaine de déformation élastique.

Dans le cas des figures 3 à 8, le sens de montage de la capsule 10 et la direction de glissement sont parallèles, et la capsule 10 assure une fonction de désengagement "fusible" de la colonne de direction. La zone de frottement est limitée et la courbe d'effort s'apparente à une montée très importante et brutale.

A ce système de désengagement 10 peut être ajouté un système de guidage et d'absorption d'énergie, utilisant la même capsule 10 dans une configuration différente représentée sur les figures 9 à 12. Dans ce cas, la direction de glissement est perpendiculaire au sens de montage. La plaque support 1 sur laquelle vient se fixer la capsule 10 est la même, le principe de tenue pendant le transport et de déformation à l'assemblage est le même.

Les seules différences résident dans :
- l'obtention du jeu fonctionnel garantissant le non blocage de la colonne de direction et donnée par des chanfreins à faible pente 57 et 58 ;
- la perpendicularité entre direction de glissement et la direction de montage ; et
- la fonction de guidage et d'absorption d'énergie assurée par la capsule 10 sur la course lors du choc.

Les principaux avantages de ce type de capsule 10 sont les suivants :
- l'effort de glissement ne dépend pas du couple de serrage des vis de fixation 59,
- la mise en place de la capsule 10 est simple, les deux fonctions recherchées sont remplies avec une seule pièce ; et
- le fonctionnement est robuste dans le temps et en température, la capsule 10 est conçue de manière à rester dans un domaine de déformation élastique.

## Revendications

1. Dispositif d'absorption d'énergie d'une colonne de direction de véhicule automobile, ladite colonne de direction étant montée dans un ensemble support (1) qui est relié et solidarisé à la structure du véhicule (9) par des moyens de fixation (59), ayant chacun leur axe de fixation (60), et qui peuvent comporter une capsule d'absorption d'énergie (10), en tôle métallique, disposée et serrée dans ledit ensemble support (1) par le moyen de fixation (59), **caractérisé en ce que** :
- ledit dispositif est muni d'au moins une capsule d'absorption d'énergie (10) qui comporte un élément central (11) et deux éléments latéraux (13, 14) ;
- l'élément central (11) est constitué par une partie pliée à 180 ° avec une pliure (12) se prolongeant par deux portions centrales (17, 18), ladite pliure (12) ayant un rayon de courbure déterminé autour d'un axe de pliage (22) ;
- chacun des deux éléments latéraux (13, 14) est réalisé sur chacun des deux côtés (27, 28) de la portion centrale (17), il s'articule autour d'un axe de déformation (23, 24) sensiblement perpendiculaire à l'axe de pliage (22) et situé à proximité du côté correspondant (27, 28) de manière, qu'à l'état libre, l'extrémité (33, 34) de chaque élément latéral (13, 14) se rapproche de l'autre portion centrale (18) ;
- les deux portions centrales (17, 18) possèdent chacune un trou de passage (19, 20) de l'élément de fixation (59) ;
- l'une des deux portions centrales (17, 18) est munie d'une entretoise (21) avec un trou de passage (19) de l'élément de fixation (59) et dont la longueur est déterminée de manière, qu'après fixation de la capsule d'absorption d'énergie (10) avec l'ensemble support (1) sur la structure du véhicule (9), l'entretoise (21) s'applique contre l'autre portion centrale (18, 17) en comprimant les deux éléments latéraux (13, 14) à la valeur voulue.

2. Dispositif d'absorption d'énergie selon la revendication 1, **caractérisé en ce que** la portion centrale (18), non munie d'éléments latéraux (13, 14), comporte au moins un élément de maintien (15, 16) relativement flexible qui est réalisé dans la même tôle métallique que ladite portion centrale (18), ledit élément de maintien (15, 16) s'articule autour d'un axe de maintien (25, 26) situé sur le côté (29, 30) de ladite portion centrale (18), de manière, qu'à l'état libre, ledit élément de maintien (15, 16) a son extrémité (35, 36) qui se rapproche de l'autre portion centrale (17), et qu'après montage sur l'ensemble support (1), ladite extrémité (35, 36) s'engage dans une fente (45, 46, 55, 56) aménagée dans l'ensemble support (1) pour assurer la mise en place et le maintien de la capsule d'absorption d'énergie (10) sur l'ensemble support (1) avant montage dans le véhicule automobile, l'élément de maintien (15, 16) étant monté contre la face d'appui (9) de la structure.

3. Dispositif d'absorption d'énergie selon la revendication 2, **caractérisé en ce que** la portion centrale (18) non munie d'éléments latéraux (13, 14) comporte deux éléments de maintien (15, 16) dont l'axe de maintien (25, 26) est sensiblement parallèle à l'axe de pliage (22).

4. Dispositif d'absorption d'énergie selon l'une quelconque des revendications précédentes, **caractérisé en ce que** la capsule d'absorption d'énergie (10) est disposée sur l'ensemble support (1) de manière que l'axe de pliage (22) soit sensiblement perpendiculaire à la direction de la force due au choc, l'ouverture de passage (41) de l'élément de fixation (59), qui est agencée sur l'ensemble support (1), étant allongée et débouchante dans la direction de la force due au choc, pour permettre le désengagement de la capsule (10) de l'ensemble support (1) ; la fente (45, 46) aménagée dans l'ensemble support (1) se prolongeant par un léger renfoncement (47, 48), afin d'assurer le dégagement de l'élément de maintien (15, 16) en cas de choc.

5. Dispositif d'absorption d'énergie selon l'une quelconque des revendications 1 à 3, **caractérisé en ce que** la capsule d'absorption d'énergie (10) est disposée sur l'ensemble support (1) de manière que l'axe de pliage (22) soit sensiblement parallèle à la direction de la force due au choc, le trou de passage (50) de l'élément de fixation (59), qui est agencé sur l'ensemble support (1), étant allongé dans la direction de la force due au choc, pour permettre la course d'absorption d'énergie ; la fente (55, 56) aménagée dans l'ensemble support (1) se prolongeant par un chanfrein (57, 58) à faible pente, dirigé dans la direction de la force due au choc, afin d'assurer le dégagement de l'élément de maintien (15, 16) en cas de choc.

6. Dispositif d'absorption d'énergie selon la revendication 4, **caractérisé en ce que** la colonne de direction comporte deux capsules d'absorption d'énergie (10) qui sont disposées de part et d'autre du plan vertical (4) passant par l'axe de direction, et dont l'axe de pliage (22) est sensiblement perpendiculaire à la direction de la force due au choc.

7. Dispositif d'absorption d'énergie selon la revendication 5, **caractérisé en ce que** la colonne de direction comporte deux capsules d'absorption d'énergie (10), qui sont disposées de part et d'autre du plan vertical (4) passant par l'axe de direction, et dont l'axe de pliage (22) est sensiblement parallèle à la direction de la force due au choc.

8. Dispositif d'absorption d'énergie selon la revendication 6, **caractérisé en ce que** la colonne de direction comporte, en plus des deux capsules d'absorption d'énergie (10) à axe de pliage (22) sensiblement perpendiculaire à la direction du choc, deux capsules d'absorption d'énergie (10) à axe de pliage (22) sensiblement parallèle à la direction du choc et qui sont disposées de part et d'autre du plan vertical (4) passant par l'axe de direction.

9. Dispositif d'absorption d'énergie selon la revendication 8, **caractérisé en ce que** chaque groupe de deux capsules d'absorption d'énergie (10) comporte deux capsules identiques, qui sont disposées symétriquement l'une par rapport à l'autre par rapport au plan vertical (4) passant par l'axe de direction.

10. Dispositif d'absorption d'énergie selon l'une quelconque des revendications précédentes, **caractérisé en ce que** le moyen de fixation est une vis de fixation (59) se montant directement dans la structure du véhicule (9).
